# EUROPEAN PATENT APPLICATION

(11) **EP 0 702 333 A2**
(43) Date of publication of application: **20.03.1996**
(21) Application number: 95306537.2
(22) Date of filing: 15.09.1995
(51) Int. Cl.: G06T 15/50

(54) **Method of drawing shadow and three-dimensional graphic computer system**

(30) Priority: 16.09.1994 JP 221761/94
(71) Applicant: International Business Machines Corporation, Armonk, N.Y. 10504 (US)
(72) Inventor: Doi, Akio, Machida-shi, Tokyo-to (JP); Itoh, Takayuki, Sagamihara-shi, Kanagawa-ken (JP); Shimada, Kenji, Yokohama-shi, Kanagawa-ken (JP)
(74) Representative: Moss, Robert Douglas

(57) **Abstract**

Provided are systems and methods for facilitating efficient mesh generation within a radiosity method of image generation and for increasing the speed of the rendering of the radiosity method.

Shadow images, which are formed on an image of a light-receiving surface by occluding virtual light emitted from an image of light source, by an image of occluding surface, are drawn by the following steps: generating data representative of virtual brightness discontinuity edges (39) for partitioning the image of the light-receiving surface into a first part in which the light is completely occluded by the image of the occluding surface, and a second part onto which part of the light is irradiated; virtually dividing the image of the light-receiving surface into areas by data of line segments constituting the brightness discontinuity edges and holding each of the divided areas as data of loops which comprise the line segments and encircle the areas; checking and holding irradiation states of each light source for each of the divided areas; virtually meshing (47) each of the divided area by making reference to the irradiation state; calculating a value of brightness of each element formed by the meshing step by making reference to the irradiation state, and generating shadowed picture data (49) and displaying the generated picture data on the display device.

## Description

### Field of the invention

The present invention relates to computer graphics, and more particularly to shadow processing in a three-dimensional computer graphics system.

### Background

It is important in computer graphics to display shadows to generate a more realistic picture. The reality will be increased if the shadow is expressed more realistically by both an umbra space representative of a space where light beams are completely occluded and a penumbra space representative of a space where some light beams are radiated but there is partial occlusion of radiation.

As a method used in the generation of more realistic pictures, there is a radiosity method. This radiosity method is an algorithmic method of obtaining a radiated illuminance field in which interreflection at a diffusion surface is taken into consideration, based on the theory of heat engineering. The radiosity is the energy per hour and per area as a light-receiving surface irradiates the light received directly from a source of light and the light received indirectly due to interreflection.

In this radiosity method, the light-receiving surface is divided into meshes for calculation and this mesh division is very important from the standpoint of the amount of data to be processed in the calculation, the capacity of storage required, and the quality of picture generated. If the number of meshes is increased, the amount of calculation or amount of data will be increased, and if the number of meshes is decreased, a reduction in the picture quality cannot be avoided.

In actually applying this radiosity method, there was proposed, in a progressive refinement radiosity method, an adaptive meshing algorithm of dynamically redividing only a mesh in which a change in brightness is large. For the details of this method, you are referred to (1) M. F. Cohen, S. E. Chen, J. R. Wallen, and D. P. Greenberg, "A Progressive Refinement Approach for Realistic Image Synthesis," Computer Graphics, Vol. 22, No. 4, pp 75-84, 1988, (2) A. T. Campbell III and D. Fussell, "Adaptive Mesh Generation for Global Diffuse Illumination," Computer Graphics, Vol. 24, No. 4, pp 155-164, 1990, and (3) D. R. Baum, S. Mann, P. S. Kevin, and J. M. Winget, "Making Radiosity Usable: Automatic Preprocessing and Meshing Techniques for the Generation of Accurate Radiosity Solutions," Computer Graphics, Vol. 25, No. 4, pp 51-69, 1990.

This method, however, has the following drawbacks. (1) It is difficult to specify a difference in values of brightness or a minimum mesh width which is a threshold value of the mesh division, so users have to rely on trial and error. Also, (2) it cannot be predicted what number of meshes will be generated, and so limitations are put on memory. (3) Since information on a light source is not available for each area, it is necessary to calculate brightness each time division is performed. (4) Each time the magnitude of a mesh is changed, there occurs a sampling error, so a large defect tends to remain in a picture to be generated. (5) Shadow leaks and light leaks cannot be prevented. (6) In the case of a point light source or a light source whose area is very small, a great number of meshes will be required.

To solve the above problems, there was proposed a method of calculating boundary edges which indicate where brightness changes discontinuously (i.e., brightness discontinuity edges), at a light-receiving surface, and clearly expressing the discontinuous brightness distribution by generating meshes along the brightness discontinuity edges. For the details of this method, you are referred to D. Linschinski, F. Tampieri, and D. P. Greenberg, "Combining Hierarchical Radiosity and Discontinuity Meshing," Computer Graphics, Vol. 27, No. 3, 1993.

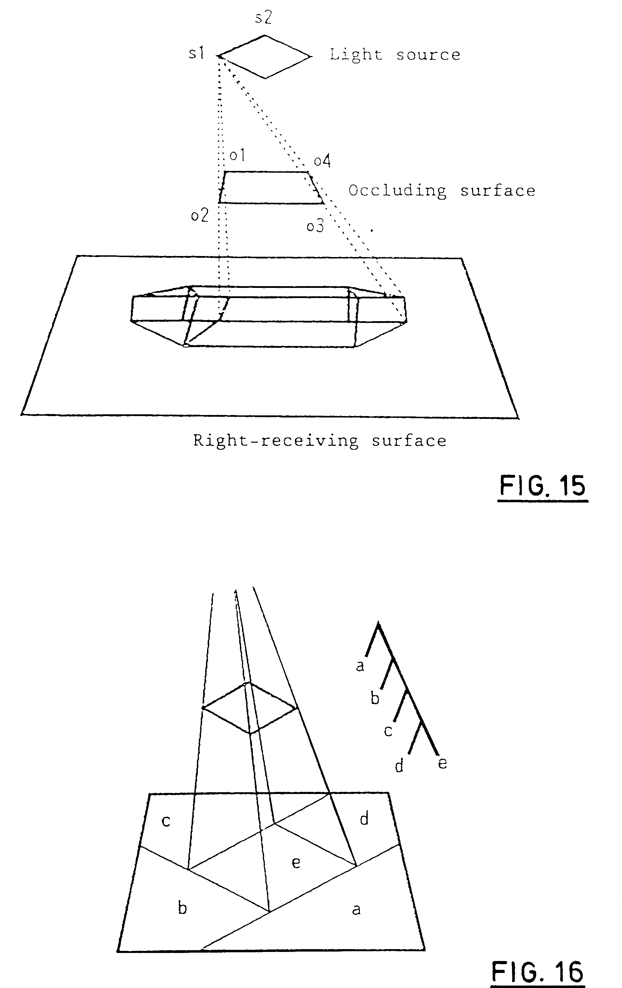

These brightness discontinuity edges are given by a set of intersecting lines between brightness critical surfaces defined by a light source and an occluding surface and a light-receiving surface. The brightness critical surface is a polygon that is formed by the vertices of a light source and the side of an occluding surface or by the side of a light source and the vertex of an occluding surface. In Figure 15, for example, the line segment at which the brightness of a light-receiving surface (generally, a light-receiving object) becomes discontinuous can be obtained as the intersecting line between the light-receiving surface and a plane containing the vertex (s1, s2, s3, and s4) of a light source and the side (o1o2, o2o3, o3o4, and o4o1) of an occluding surface, or between the light-receiving surface and a plane containing the side (s1s2, s2s3, s3s4, and s4s1) of a light source and the vertex (o1, o2, o3, and o4) of an occluding surface.

If the brightness discontinuity edges are used in this way, the discontinuous brightness distribution can be made clear and useful information on the mesh division can be obtained. However, in the above-described theses, a BSP (binary space partition) tree structure is used as a data structure for holding the brightness discontinuity edges. As shown in Figure 16, this BSP tree method divides a light-receiving surface into two parts each time one brightness discontinuity edge occurs, so a large number of small pieces are finally generated and the amount of data is easily increased. Also, since a shape to be generated tends to becomes slender and long, it causes an unnatural shadow to easily occur during rendering. This is because errors are easy to occur durig calculation of brightness and, when rendering is performed, color interpolation is performed at linear interpolation.

### Summary of the invention

According to a first aspect of the present invention there is provided, in a three-dimensional computer graphic system with a display device, a method for drawing shadow images generated on an image of a light-receiving surface by occluding virtual light emitted from an image of at least one light source, by an image of at least one occluding surface.
The method comprises the steps of: (a) generating data representative of virtual brightness discontinuity edges for partitioning the image of the light-receiving surface into a first part in which the light is completely occluded by the image of the occluding surface, and a second part onto which a part of the light is radiated; (b) virtually dividing the image of the light-receiving surface into areas by data of segments constituting the brightness discontinuity edges, and storing each of the divided areas as data corresponding to loops which comprise the segments and encircle the areas; (c) checking and storing an irradiation state for each light source, for each of the divided areas; (d) virtually meshing each of the divided areas by making reference to the irradiation state; (e) calculating a value of brightness of each element generated by the meshing step by making reference to the irradiation state, and generating shadowed picture data, and (f) displaying the generated picture data on the display device. If the irradiation state of each light source is thus held for each area, the amount of data and amount of calculation required for the following meshing and calculation of brightness can be reduced.

The present invention thus facilitates efficient mesh generation for the radiosity method and enables the speed of the rendering of the radiosity method to be increased, by making use of an area that the brightness discontinuity edges form. The amount of data which is used in the calculations can be kept to an appropriate level and a more realistic picture can be provided by the computer graphics.

In this method, the step (a) preferably generates data of a first shadow polyhedron for specifying an umbra space in which the light is completely occluded by the image of the occluding surface and which is a virtual space, and data of a second shadow polyhedron for specifying a penumbra space on which a part of the light is irradiated and which is a virtual space, and generates data representative of virtual brightness discontinuity edges generated on the image of the light-receiving surface, by using the data of the first and second shadow polyhedrons. Using this method, a picture can be drawn at higher speed.

It is also preferred that the step (b) includes the steps of: (g) registering each of the segments constituting the generated brightness discontinuity edges and (h) virtually generating a first loop which goes in one direction along the segment and a second loop which goes in a direction opposite to the one direction along the segment, for each of the line segments. While the leak of the loop generation is being prevented in this way, the loop can be simply generated.

According to a preferred embodiment of the invention, the step (g) further includes the step of setting a first flag with respect to the one direction and a second flag with respect to the direction opposite to the one direction, for each of the registered segments. In this manner, checking can be simply done.

Also, the step (h) preferably further includes the step of setting the first flag with respect to the one direction when the first loop which goes in one direction along the line segment is virtually generated, and setting the second flag with respect to the direction opposite to the one direction when the second loop which goes in a direction opposite to the one direction along the line segment is virtually generated.

The step (b) may further include the steps of: determining if inside one loop there exists another loop; and recording an area by storing data on the one loop when inside the one loop there does not exist another loop, and recording an area by storing data on the one loop and data on said other loop which circles in a direction opposite to the one loop when inside the one loop there exists another loop. According to this method, the area formed on the light-receiving surface can be simply grasped.

The above-described irradiation state can be divided into a state contained in an umbra space, a state contained in a penumbra space, and a fully irradiated state by the combination of the light source and the occluding surface. Thus, information on one light source can be held with two bits, so the amount of data can be reduced.

In a second aspect, the invention provides a three-dimensional computer graphic system for executing the above-described steps.

### Description of the preferred embodiments

The present invention will now be described in more detail, by way of example, with reference to the accompanying drawings in which:
Figure 1 is a block diagram of a system in which the present invention may be implemented;
Figure 2 is a block diagram showing the components of a processor 1 according to the present invention;
Figure 3 is a high level flowchart of a method according to the present invention;
Figure 4 is a diagram showing an example of a shadow polyhedron;
Figure 5 is a diagram used to explain a formation method of a shadow polyhedron representative of an umbra space;
Figure 6 is a diagram used to explain a formation method of a shadow polyhedron representing an umbra space;
Figure 7 is a diagram used to explain a formation method of a shadow polyhedron representing a penumbra space;
Figure 8 is a diagram used to explain a formation method of a shadow polyhedron representing a penumbra space;
Figure 9 is a diagram used to explain a formation method of a shadow polyhedron representing a penumbra space;
Figure 10 is a diagram used to explain a method of forming a brightness discontinuity edge loop;
Figure 11 is a diagram used to explain a method of forming a brightness discontinuity edge loop;
Figure 12 is a diagram showing the relationship of irradiation between a light source and an area;
Figure 13 is a diagram used to explain the brightness discontinuity edge of D0 class;
Figure 14 is a diagram used to explain the brightness discontinuity edges of D0 class and Dn class;
Figure 15 is a diagram used to explain the brightness critical surface and the brightness discontinuity edge; and
Figure 16 is a diagram used to explain a conventional method of holding a brightness discontinuity edge.

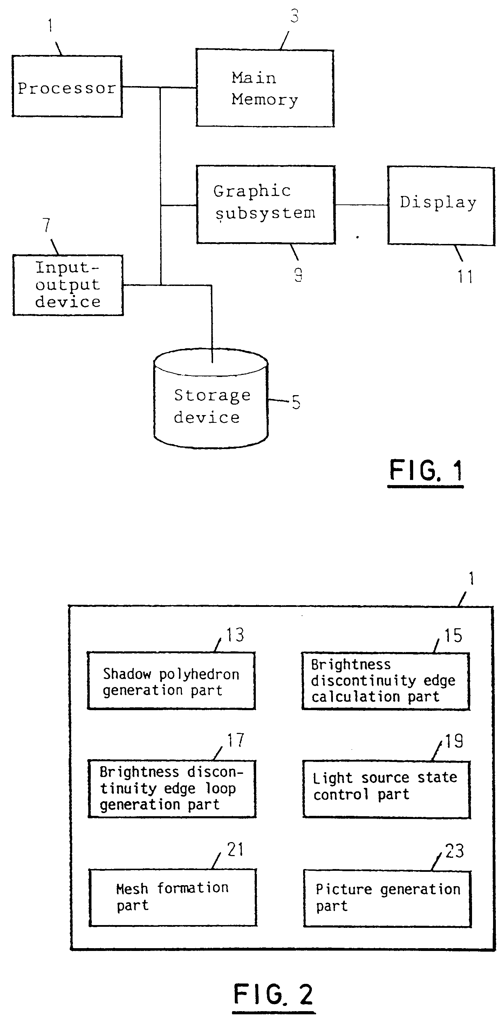

Figure 1 shows a system by which the present invention is carried out. A processor 1 is connected to a main memory 3 and makes a calculation by using the programs and data stored in the main memory 3. An input-output device 7 includes a keyboard, a mouse, a printer, etc., inputs the command and data with respect to the processor 1, and outputs necessary data. A storage device 5 is a hard-disk device for storing data to be loaded into the main memory 3. As data, there have also been stored information on the location of a light source, an occluding surface, a light-receiving surface, etc., and information on the irradiation of a light source. To this system there is connected a graphic subsystem 9 for drawing a picture on a display 11 at high speed, and the graphic subsystem 9 draws a picture on the display 11 in cooperation with the processor 1 and the programs and data loaded in the main memory 3.

Figure 2 shows the details of the processor 1 of the present invention. As shown in the figure, the processor 1 can be divided into six large parts of a shadow polyhedron generation part 13, a brightness discontinuity edge calculation part 15, a brightness discontinuity edge loop formation part 17, a light source state control part 19, a mesh formation part 21, and a picture generation part 23, each of which does operation to be described later.

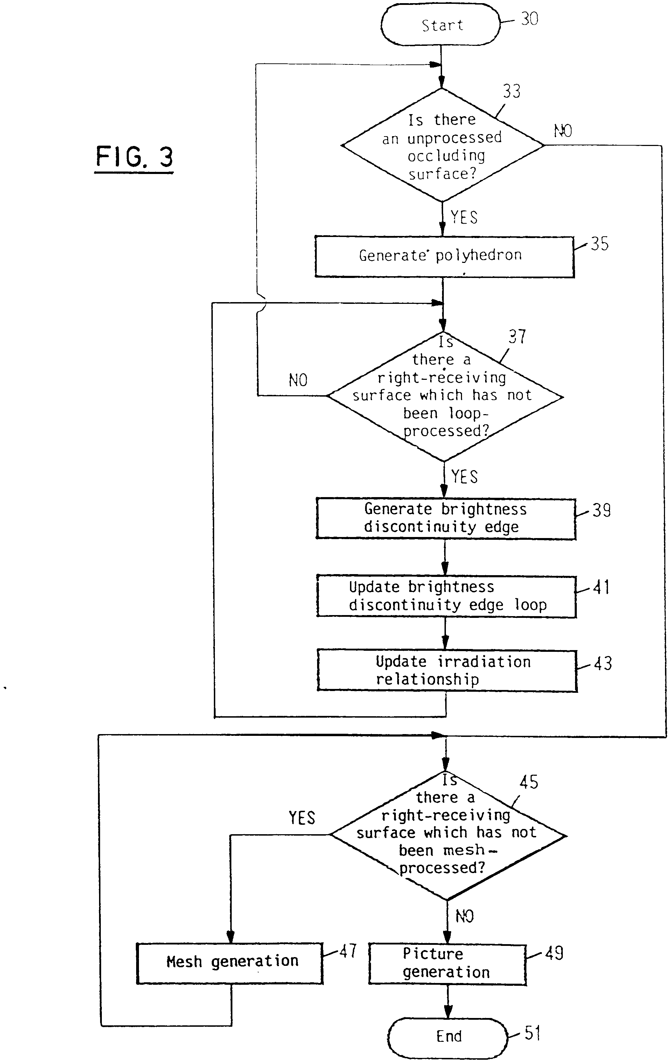

That is, the operation will follow the algorithm shown in Figure 3. First, in the shadow polygon generation part 13 a shadow polygon is generated for each occluding surface associated with a display picture (step 33). The shadow polygon will be described later. Thereafter, in the brightness discontinuity edge calculation part 15 a brightness discontinuity edge is calculated for each light-receiving surface (step 39). If the brightness discontinuity edge is calculated, the light-receiving surface is divided into some areas, so in the brightness discontinuity edge loop formation part 17 a brightness discontinuity edge loop is formed to grasp the divided areas (step 41). And, in the light source state control part 19, whether a light beam from a light source irradiates each area, or a irradiation relation (irradiation state) such as an umbra or a penumbra is confirmed by the brightness discontinuity edge loop (step 43). With the use of data generated up to now, in the mesh generation part 21 each area is divided into meshes (step 47), and in the picture generation part 23 a calculation required for generating a picture is done for each element of the divided meshes (step 49).

Note that for simplification, the light source, occluding surface, and light-receiving surface that the present invention handles have been limited to a convex polygon. For this reason, it is assumed that the light source and the surface have been divided in a preprocess step into convex polygons. To hold the shape of the convex polygon in the process steps prior to the mesh generation, the division of the light-receiving surface by the brightness discontinuity edge loop is executed at the same time after all the brightness discontinuity edges are generated.

The above-described algorithm will hereinafter be described in detail.

### Generation of shadow polyhedron

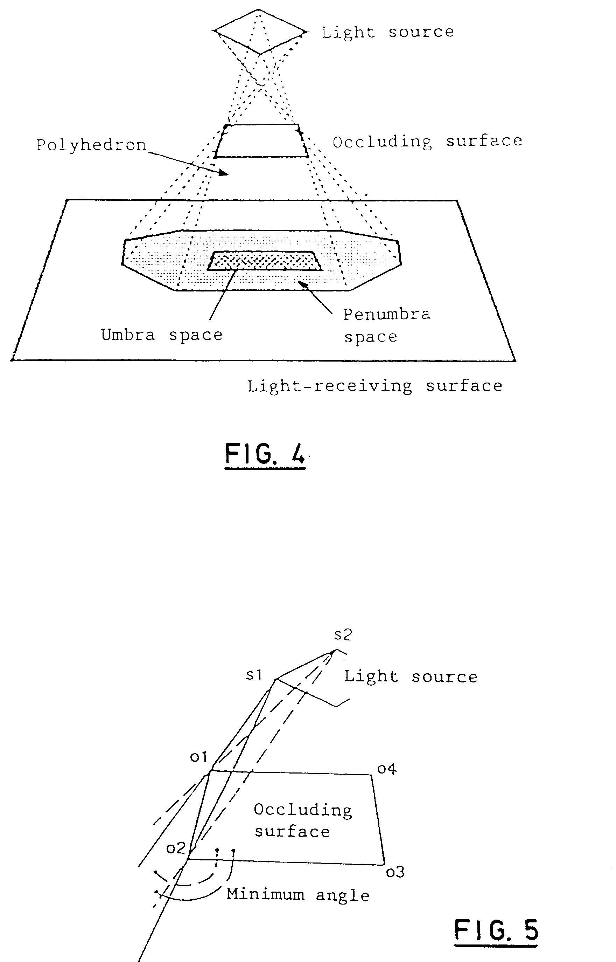

If the light source and the occluding surface are limited to a convex polygon, as described above, a space where the light beams are occluded will be a polyhedron. This polyhedron is referred to as the shadow polyhedron. The shadow polyhedron is a polyhedron (shown by broken lines) between the occluding surface and light-receiving surface of Figure 4, for example. As described above, there are a plurality of brightness discontinuity edges, but the brightness discontinuity edge, which is an intersecting line between the surface constituting the shadow polyhedron and the light-receiving surface, is important. This is because a shadow polyhedron representative of an umbra space and a shadow polyhedron representative of a penumbra space are calculated and the state of the shadow on the light-receiving surface becomes clear by the intersecting line between the surface constituting the polyhedron and the light-receiving surface. Also, the amount of data and amount of process of the brightness discontinuity edges can be made efficient.

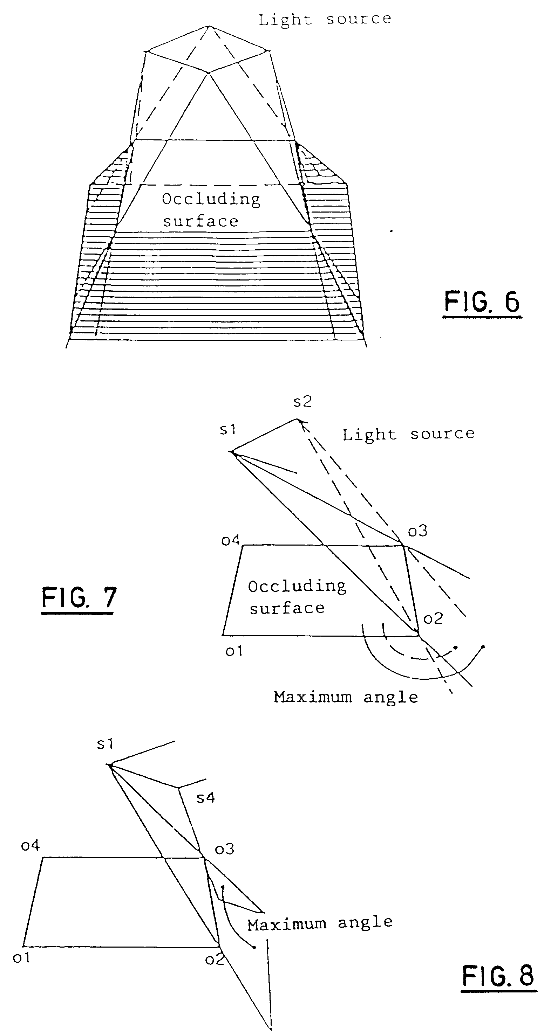

The shadow polygon representative of an umbra space is therefore calculated. First, one side of an occluding surface is selected to form a plane containing that side and each vertex of a light source. For example, the side o1o2 of the occluding surface is selected as shown in Figure 5. The planes containing this side o1o2 and each of the vertexes s1, s2, · · of the light source are generated. There is selected a plane whose angle with respect to the occluding surface is minimum among the generated planes. This plane is one surface of the shadow polyhedron representative of an umbra space. The same operation is performed for each of the sides o2o3, o3o4, and o4o1 of the occluding surface, and a square pillar representative of an umbra space, such as that shown in Figure 6, is generated by cutting with the intersecting line of each of the generated surfaces.

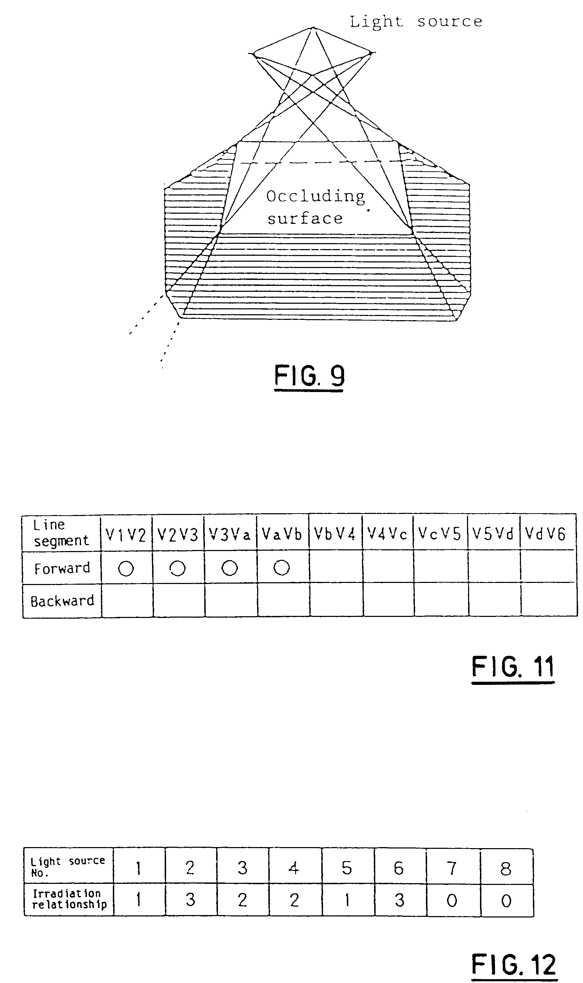

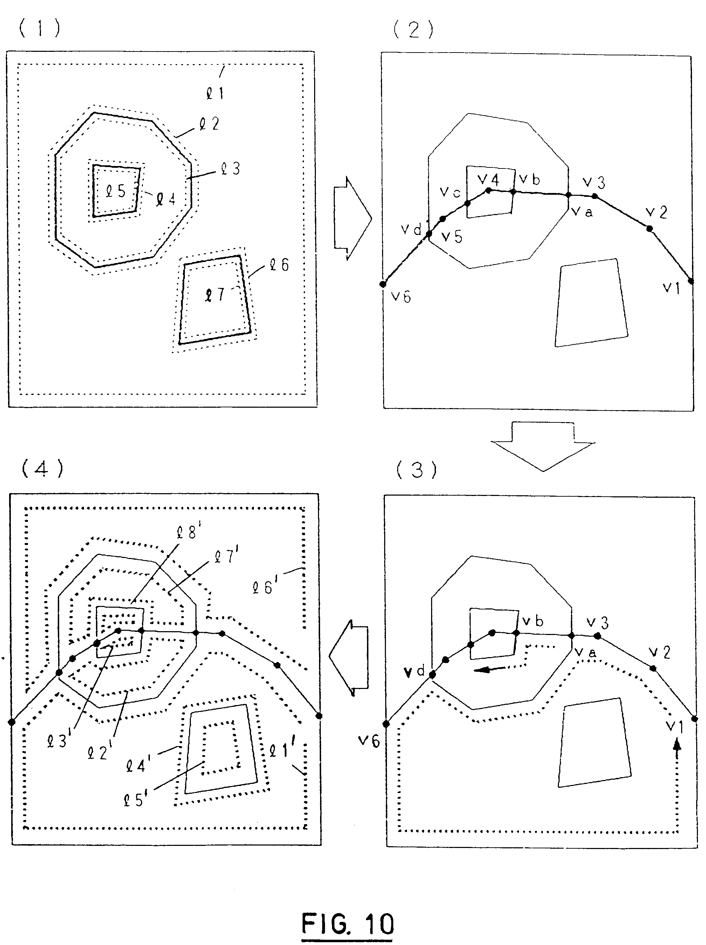

Next, a shadow polygon representative of a penumbra space is calculated. As in the case of the umbra space, one side of the occluding surface is selected to form a plane containing that side and each vertex of a light source. But, there is selected a plane whose angle with respect to the occluding surface is maximum among the generated planes. For example, between the planes s1o2o3 and s2o2o3 in Figure 7, the angle of the plane s1o2o3 with respect to the occluding surface is greater. The plane s1o2o3 is therefore selected. Following this, there is selected a plane which is adjacent to the selected plane s1o2o3 and whose angle with respect to the plane s1o2o3 is maximum. In Figure 8, for example, the angle of a plane s1o3s4 with respect to the selected plane s1o2o3 is maximum among planes sharing the line s1o3 of the plane s1o2o3 and therefore the plane s1o3s4 is selected. Likewise, an adjacent plane whose angle with respect to the previously selected plane is maximum is selected in sequence, so that a convex hull comprising a group of planes can be formed (Figure 9). This convex hull corresponds to a square pillar representative of a penumbra space. A calculation such as this is made in the shadow polyhedron generation part 13 in Figure 2 (step 35).

Note that while the number of brightness critical surfaces to be generated by the method shown in Figure 15 is 2 N1N2 if the number of the sides of a light source and the number of the sides of an occluding surface are N1 and N2, the number of brightness critical surfaces by the method using a shadow polyhedron is N1 + 2 N2, so it is clear that the method using a shadow polyhedron is effective in amount of process and amount of data. Note that this method using a shadow polyhedron is disclosed in N. Chin, and S. Feiner, "Near Real-Time Shadow Generation Using BPS Trees," Computer Graphics, Vol. 23, No. 3, pp. 99-106, 1989.

### Calculation of brightness discontinuity edge

As described in the previous step, the brightness discontinuity edges on the light-receiving surface are obtained by calculating the intersecting lines between the shadow polygon representative of an umbra space and the light-receiving surface and also the intersecting lines between the shadow polygon representative of a penumbra space and the light-receiving surface. In the present invention the intersecting points between each side of a shadow polygon (Figure 9) and a light-receiving surface are calculated, and by connecting the intersecting points calculated, the intersecting line is obtained. A calculation such as this is made in the brightness discontinuity edge calculation part 15 (step 39).

### Formation of brightness discontinuity edge loop

In the present invention, a brightness discontinuity edge loop is formed to grasp the areas of a light-receiving surface divided by the brightness discontinuity edges. A method of generating a brightness discontinuity edge loop will first be described.

In the first place, the brightness discontinuity edges generated are grasped as the line segments, and a list of the line segments is generated. Each line segment has two flags of a "forward" flag and a "backward" flag in a table, and if the line segment is contained when a certain brightness discontinuity edge loop was generated, a "forward" flag or a "backward" flag is put up in the table, depending upon the direction of that loop. With this, an omission of loop generation can be prevented.

Among the line segments of the brightness discontinuity edges, one of the line segments that do not have the flag of the above-described table is selected to generate a new loop. That line segment is used as the starting point, and a discontinuity edge sharing a vertex is searched in sequence. Now, when the line segment of a new brightness discontinuity edge was searched, one of the forward and backward flags is put up in the table for the line segment from the searched direction. When a plurality of discontinuity edges share the vertex, a line segment whose angle with respect to the vertex is minimum is selected and searching is continued. If the first selected line segment is again searched, the searching will be stopped and a group of brightness discontinuity edges searched will be registered as a loop. By repeating this searching until all the line segments in the table have the above-described flag, the generation of the brightness discontinuity edge loop is completed.

A concrete example will be described with the use of Figure 10. At first, the areas on a light-receiving surface has been grasped by loops l1 to l7, as shown by broken lines in Figure 10-(1). Consider a case where in this state, new brightness discontinuity edges were generated from six vertexes of v1 to v6. Assume now that the intersecting points with the already generated brightness discontinuity edges are va, vb, vc, and vd. Therefore, the newly generated line segments are v1v2, v2v3, v3va, vavb, vbv4, v4vc, vcv5, v5vd, and vdv6, and they are registered in a table, as shown in Figure 11. To generate a new loop, some line segment in the table is selected at the direction that a flag cannot be put up, and an adjacent line segment is selected in sequence. For example, if the line segment v1v2 is selected as a "forward" direction and an adjacent line segment is searched in sequence, the loop will be a loop l1' of Figure 10-(3). In this loop l1', searching is started from the vertex v1, and at the vertex va, the line segment of a certain existing discontinuity edge where the above-described angle is minimum is selected. And, at the vertex vd, the line segment of a certain existing discontinuity edge where the above-described angle is minimum is selected, and the searching has returned to the vertex v1. By this searching, there were searched new line segments v1v2, v2v3, v3va, and vdv6 in the "forward" direction. Therefore, for these line segments, the flag is put up in the "forward" direction, as shown in Figure 11. In Figure 10-(3) the further search from the line segment vavb in the "forward" direction is shown, and if the search is made in this way in the direction of a line segment where the flag of the table has not been put up, loops will be drawn as shown in Figure 10-(4). In Figure 10-(4) there are loops l1' to l8', and the loops l4' and l5', which has no intersecting point with the new brightness discontinuity edges, are equal to the loops l6 and l7 of Figure 10-(1), respectively.

The loop generated in this way forms an outside loop or inside hole of an area divided when a light-receiving surface is divided. In the present invention, the rotational direction of a loop newly generated at the time of loop generation is calculated, and it is determined if the new loop becomes an outside loop or inside hole. For example, in the case of Figure 10-(4) the loops l2', l3', l6', l7', and l8' represent the areas of the light-receiving surface as they are, so there is no problem, but the loops l4' and l5' inside the loop l1' form a hole. Since in this case the loop l1' was the "forward" loop, an area is to be grasped by a pair with a "backward" loop (in this case, l5') between the loops l4' and l5'. And, the loop l4' represents an area inside the hole.

The operation of the step 41 of Figure 3 by the brightness discontinuity edge loop formation part 17 is executed in this way.

### Grasping and holding of relationship of irradiation

As described above, each area dividing a light-receiving surface can be grasped by forming the brightness discontinuity edge loop. Therefore, an inside-outside determination with a shadow polyhedron is made for each area. In the example of Figure 10-(4), the inside-outside determination may be made for each loop except a part, as described above. By this process, it can be calculated if the light beams from a light source have been radiated onto each area, if some of the light beams have been irradiated, or if no light beam has been radiated. A calculation of illuminance is made for each light source, so holding what is the radiation relationship of the area for each light source is important to reduce the amount of calculation. Each area (loop) holds the irradiation relationship with all light sources as a state variable. For example, 3 is assigned to a case where a loop is an umbra, 2 to a case where a loop is a penumbra, 1 to a case where a loop has been irradiated, and 0 to a case where a loop is unprocessed. Therefore, only two bits are required for one light source. An example of this holding of data is shown in Figure 12.

For example, if new brightness discontinuity edges are generated from six vertexes of v1 to v6, as shown in Figure 10, and the lower portion under these vertexes v1 to v6 is a penumbra by a new light source, 2 will be inputted into the columns of new light sources of the data structure of the areas that are grasped by l2', l3', l4', and l1' and l5'.

The operation of the step 43 in Figure 3 by the light source state control part 19 in Figure 2 is executed in this way.

### Generation of mesh

Since in the present invention a mesh crossing the brightness discontinuity edge is not generated, in the brightness discontinuity edge loop formation part a mesh is generated for each area (loop) grasped.

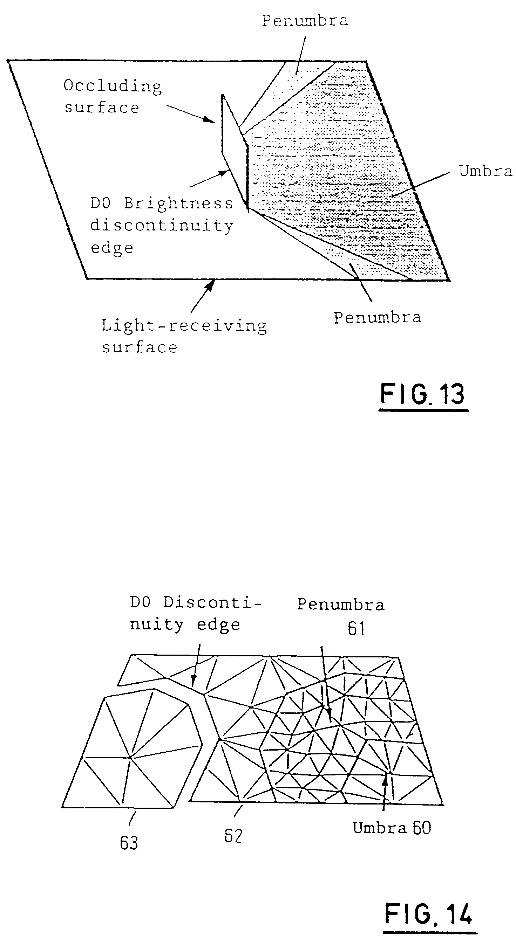

Incidentally, for the continuities of brightness on both sides of the brightness discontinuity edge, there are a D0 class in which a value of brightness itself represents discontinuity and a Dn class in which the n-order (n = 1, 2, 3, · · ·) differentiated value of a brightness value represents discontinuity. For the brightness discontinuity edge which is this D0 class, there are a brightness discontinuity edge that is generated by a point light source, a brightness discontinuity edge (Figure 13) that occurs by bringing an occluding surface into contact at some side of the occluding surface with a light-receiving surface, etc. In such cases, it is not preferable that an element to which a mesh is adjacent share a vertex. Also, for the brightness discontinuity edge generated by a surface light source in the state where there is no contact between an occluding surface and a light-receiving surface, the continuity of brightness becomes the Dn class, so if adjacent elements have different vertexes, there would be the possibility that the continuity of the Dn class cannot be held.

Therefore, for the brightness discontinuity edge of the D0 class, individual side and vertex are given to the areas on the both sides when a light-receiving surface is divided. For the brightness discontinuity edge of the Dn class, the sides and vertexes of areas on the both sides are shared. In the case of Figure 14, for example, an umbra 60 and a penumbra 61 are generated by a surface light source, and an area 63 is generated by other point light source. An area 62 is an area where light beams are irradiated by both a surface light source and a point light source. Since the areas 60 through 62 have continuity of brightness, they are divided by the brightness discontinuity edge of the Dn class. However, since the area 63 is an umbra by a point light source, it has no continuity of brightness and is the brightness discontinuity edge of the D0 class, so individual vertex and side are required as shown in Figure 14.

Implementing a method a described above enables shadow leak and light leak to be avoided.

In actually meshing, reference is made to the relationship of irradiation with a light source. The change in brightness is normally large in a penumbra area, so the number of elements constituting meshes is increased and the size of each element is reduced. Also, since in an umbra or an area irradiated, the change in brightness is small, there will be no problem if the number of elements is reduced and the size of each element is increased. In addition to an easiness in control of the size of a mesh such as this, there is required meshing which has characteristics such as consistency between a brightness discontinuity edge characteristic and a mesh boundary, and a mesh shape with no distortion. The present invention uses a method such that nodes are located using a dominant equation of a physical phenomenon as a model. These nodes are interconnected with the aid of a Delauney's net to form meshes. For example, there may be used a meshing technique disclosed in Kenji Shimada, "Most Close Filling of Sphere and Automatic Triangle Mesh Division of Curved Surface by Delauney's Net," Information Processing Society of Japan, Graphics and CAD Research Report, No. 67, pp 1-8, 1994.

In this way, an increase in the number of elements can be controlled as a whole without deteriorating the quality of a picture to be obtained. As described above, the mesh formation part 21 of Figure 2 executes the operation of the step 47 of Figure 3.

### Generation of picture

In the generation of pictures, the brightness by direct light and the brightness by indirect light are obtained separately. However, since the determination of a shadow area by direct light has been completed at the step of grasping and holding of the relationship of irradiation, an area other a penumbra can be easily calculated. The penumbra area generated by a surface light source may be calculated with the use of a conventional light tracing method by point sampling. Also, as an approximate solution, it can be calculated based on only the information of the light source state control part 19.

In the calculation of indirect light, a form factor is calculated for each patch by the radiation from a light source, and the non-radiation radiosity from the patch is radiated. The patch area as a unit of radiation and the element area that receives light are used by triangle-dividing the brightness discontinuity edge loop. A method of calculating indirect light by radiation from a patch can be calculated at high speed, as compared with a method of collecting light. However, since a form factor is calculated by a relative equation, FᵢⱼAᵢ = FⱼᵢAⱼ, an error in accuracy tends to occur. For this reason, each element is projected on a hemispheric base, and at the time of preview, the form factor is calculated with the use of the point sampling based on a z buffering method, and in the final generation of a picture, it is calculated with the use of the line sampling based on a scan line unit. This is described in detail in Akio Doi, "Bidirectional Radiosity Approach for Complex Environments," Denshi Tokyo, IEEE Tokyo Section, No. 32, pp. 93-99, 1993.

Since mirror reflection largely depends on the direction from a visual point, a light tracing method is used after interreflection light is calculated. Since in the prior art a shadow area as a diffusion reflection component is calculated is not extracted, it is again calculated if the diffusion reflection component corresponds to a shadow area, when a mirror reflection component is calculated. However, in the present invention each area has information on a shadow with respect to each light source, so shadow determination is not required except a penumbra area.

Thus, in the calculation of picture generation, the calculation by direct light is greatly simplified because the relationship of irradiation is already known. Other parts not described above or detail parts can be calculated with the use of a well known method, so they will not be described any further. For a detailed discussion on these, you are referred to Michael F. Cohen & John R. Wallace, "Radiosity and Realistic Image Synthesis," Academic Press Professional, pp. 65-130, 1993, and Roy Hall, "Illumination and Color in Computer Generated Imagery," Springer-Verlag.

As described above, the picture generation part 23 of Figure 2 does an operation corresponding to the step 49. The picture generated in this way is displayed on the display 11 by the cooperation of the processor 1 and graphic subsystem 9 of Figure 1.

The present invention is not limited to the above-described embodiment. While the constitution for carrying out the present invention has been shown in Figure 1, for example, the present invention is not limited to this device constitution, but it may have other bus constitution or a plurality of processors. Also, while "forward" and "backward" have been defined in forming a loop, this "forward" may be "clockwise" and "counterclockwise." Also, while, in grasping a hole area, the outer frame has been defined as a "forward" loop and the inner frame has been defined as a "backward" loop, either will do if this relationship is opposite. Also, although the irradiation relationship between the light source and the area has been umbra = 3, penumbra = 2, irradiated area = 1, and unprocessed area = 0, it may be umbra = 0, penumbra = 1, irradiated area = 2, and unprocessed area = 3, or other assignment. The method of generating a shadow polyhedron, the method of generating a brightness discontinuity edge, the meshing method, and the method of generating a picture are replaceable with other methods in which the irradiation relationship can be considered at high speed.

As described above, the mesh generation for the radiosity method is made efficient and the speed of the rendering of the radiosity method is increased, by holding the irradiation state of each light source for each area formed by the brightness discontinuity edges. In addition, the amount of data which must be processed in the generation is reduced by making the mesh generation efficient.

Other advantages are as have been described in the entire specification.

## Claims

1. In a three-dimensional computer graphic system with a display device, a method for drawing shadow images generated on an image of a light-receiving surface by occluding virtual light emitted from an image of at least one light source, by an image of at least one occluding surface, comprising the steps of:
(a) generating data representative of virtual brightness discontinuity edges for partitioning said image of said light-receiving surface into a first part in which said light is completely occluded by said image of said occluding surface, and a second part onto which a part of said light is radiated;
(b) virtually dividing said image of said light-receiving surface into areas by data of segments constituting said brightness discontinuity edges, and storing each of the divided areas as data defining loops which comprise said segments and encircle said areas;
(c) checking and storing an irradiation state for each said light source, for each of said divided areas;
(d) virtually meshing each of said divided areas by making reference to said irradiation state;
(e) calculating a value of brightness of each element generated by the meshing step by making reference to said irradiation state, and generating shadowed picture data; and
(f) displaying the generated picture data on said display device.

2. A method according to claim 1, wherein said generating step (a) comprises generating data of a first shadow polyhedron for specifying an umbra space in which said light is completely occluded by said image of said occluding surface and which is a virtual space, and data of a second shadow polyhedron for specifying a penumbra space on which a part of said light is irradiated and which is a virtual space, and generating data representative of virtual brightness discontinuity edges generated on said image of said light-receiving surface, by using said data of first and second shadow polyhedrons.

3. A method according to claim 1 or claim 2, wherein said step (b) includes the steps of: (g) registering each of said segments constituting said brightness discontinuity edges; and (h) virtually generating a first loop which goes in one direction along the segment and a second loop which goes in a direction opposite to said one direction along the segment, for each of said line segments.

4. A method according to claim 3, wherein said step (g) further includes the step of setting a first flag with respect to said one direction and a second flag with respect to said direction opposite to said one direction, for each of the registered segments.

5. A method according to claim 4, wherein said step (h) further includes the step of setting said first flag with respect to said one direction when said first loop which goes in one direction along the line segment is virtually generated, and setting said second flag with respect to said direction opposite to said one direction when said second loop which goes in a direction opposite to said one direction along the line segment is virtually generated.

6. A method according to any one of the preceding claims, wherein said step (b) further includes the steps of:
determining if inside one loop there exists another loop; and
storing an area by data on said one loop when inside said one loop there does not exist said another loop, and storing an area by data on said one loop and data on said another loop which circles in a direction opposite to said one loop when inside said one loop there exists said another loop.

7. A method according to any one of the preceding claims, wherein said irradiation states include a state contained in an umbra space, a state contained in a penumbra space, and an irradiated state.

8. A three-dimensional computer graphic system for calculating shadow images generated on an image of a light-receiving surface by occluding virtual light emitted from an image of at least one light source, by an image of at least one occluding surface, and for displaying the calculated shadow images on a display device, comprising:
(a) means for generating data representative of virtual brightness discontinuity edges for partitioning said image of said light-receiving surface into a first part in which said light is completely occluded by said image of said occluding surface, and a second part onto which a part of said light is radiated;
(b) means for virtually dividing said image of said light-receiving surface into areas by data of segments constituting said brightness discontinuity edges, and storing each of the divided areas as data of loops which comprise said segments and encircle said areas;
(c) means for checking and storing an irradiation state for each of said light source, for each said divided areas;
(d) means for virtually meshing each of said divided areas by making reference to said irradiation state;
(e) means for calculating a value of brightness of each element generated by the meshing step by making reference to said irradiation state, and generating shadowed picture data; and
(f) means for displaying the generated picture data on said display device.

9. A system according to claim 8, wherein said means (a) includes means for generating data of a first shadow polyhedron for specifying an umbra space in which said light is completely occluded by said image of said occluding surface and which is a virtual space, and data of a second shadow polyhedron for specifying a penumbra space on which a part of said light is irradiated and which is a virtual space.

10. A system according to claim 8 or claim 9, wherein said means (b) includes (g) means for registering each of said segments constituting said brightness discontinuity edges generated and (h) means for virtually generating a first loop which goes in one direction along the segment and a second loop which goes in a direction opposite to said one direction along the segment, for each of said line segments.

11. A system according to claim 10, wherein said means (g) further includes means for setting a first flag with respect to said one direction and a second flag with respect to said direction opposite to said one direction, for each of the registered line segments.

12. A system according to claim 11, wherein said means (h) further includes means for setting said first flag with respect to said one direction when said first loop which goes in one direction along the line segment is virtually generated, and setting said second flag with respect to said direction opposite to said one direction when said second loop which goes in a direction opposite to said one direction along the line segment is virtually generated.

13. A system according to any one of claims 8 to 12, wherein said means (b) further includes:
means for determining if inside one loop there exists another loop; and
means for storing an area by data on said one loop when inside said one loop there does not exist said another loop, and for storing an area by data on said one loop and data on said another loop which circles in a direction opposite to said one loop when inside said one loop there exists said another loop.
